# DEMANDE DE BREVET EUROPEEN

(11) **EP 4 825 278 A1**
(43) Date de publication de la demande: **21.10.2026**
(21) Numéro de dépôt: 26168487.2
(22) Date de dépôt: 27.03.2026
(51) Int. Cl.: A47J 31/44, A47J 31/46

(54) **DISPOSITIF DE DISTRIBUTION D'UNE BOISSON MUNI D'UN COUVERCLE A OUVERTURE AUTOMATIQUE**

(30) Priorité: 18.04.2025 FR 2504183
(71) Demandeur: SEB S.A., 69130 Ecully (FR)
(72) Inventeur: SABATTIER, Johan, 69134 Ecully Cedex (FR); MORIN, Gilles, 69134 Ecully Cedex (FR); DASSONVILLE, Yohan, 69134 Ecully Cedex (FR)
(74) Mandataire: SEB Développement

(57) **Abrégé**

La présente divulgation concerne un dispositif de distribution d'une boisson (17) comprenant :
un corps principal (62) muni :
• d'un canal d'amenée de liquide (74), une sortie du canal d'amenée de liquide (74) débouchant sur une face principale (60) du corps principal (62), et
• d'une chambre de traitement (16) présentant une ouverture sur la face principale (60),

un couvercle (56) articulé au corps principal (62), le couvercle (56) étant configuré pour sélectivement occuper une position d'obturation dans laquelle il est au contact de la face principale (60), et une position d'ouverture dans laquelle il n'est pas au contact de la face principale (60),
dans lequel l'un parmi le corps principal (62) et le couvercle (56) comprend un joint d'étanchéité (57) entre le corps principal (62) et le couvercle (56), et dans lequel le dispositif de distribution (17) comprend un élément de rappel configuré pour exercer une force de rappel tendant à rappeler le couvercle (56) vers sa position d'ouverture.

## Description

### DOMAINE TECHNIQUE

La présente divulgation concerne les dispositifs de distribution d'une boisson comprenant une pluralité de ports d'entrée/canaux pour l'acheminement de différents fluides vers une chambre de traitement, munis d'un couvercle pour l'étanchéité desdits ports d'entrée. Elle trouve notamment application pour les dispositifs de distribution de lait moussé.

### ETAT DE LA TECHNIQUE

On connaît des dispositifs de distribution d'une boisson munis d'un corps principal comprenant une pluralité de ports ou de canaux pour l'acheminement de fluides vers une chambre de traitement, dans laquelle est produite une boisson à distribuer, et d'un couvercle pouvant recouvrir le corps principal et isoler ainsi les ports ou canaux de l'extérieur.

De manière classique, le couvercle peut être retenu sur le corps principal au moyen d'une charnière.

Lors d'un nettoyage du dispositif de distribution au lave-vaisselle, il est fréquent que l'utilisateur oublie d'écarter au maximum le couvercle du corps principal, ou qu'il insère le dispositif de distribution dans le lave-vaisselle dans une position où le couvercle n'est que partiellement écarté du corps principal. De plus, même lorsque l'utilisateur prend soin d'écarter le couvercle au maximum du corps principal, il se peut que le couvercle se referme sur le corps principal au cours du nettoyage du fait d'un changement de position du dispositif de distribution en cours de nettoyage.

Or, particulièrement lorsque certains des canaux prévus dans le corps principal servent à l'acheminement de lait vers la chambre de traitement, il est crucial que ces canaux soient correctement nettoyés, car le lait séché peut causer l'apparition d'odeurs dans le dispositif et compromettre les performances du dispositif en bouchant les canaux.

### EXPOSE DE L'INVENTION

Il est donc souhaitable de pouvoir disposer d'un dispositif de distribution d'une boisson configuré de sorte à faciliter un nettoyage au lave-vaisselle du dispositif.

À cet effet, il est proposé un dispositif de distribution d'une boisson comprenant :
- un corps principal muni :
   - d'un canal d'amenée de liquide, une sortie du canal d'amenée de liquide débouchant sur une face principale du corps principal, et
   - d'une chambre de traitement présentant une ouverture sur la face principale,
- un couvercle articulé au corps principal, le couvercle étant configuré pour sélectivement occuper une position d'obturation dans laquelle il est au contact de la face principale, et une position d'ouverture dans laquelle il n'est pas au contact de la face principale,
dans lequel l'un parmi le corps principal et le couvercle comprend un joint d'étanchéité entre le corps principal et le couvercle, et dans lequel le dispositif de distribution comprend un élément de rappel configuré pour exercer une force de rappel tendant à rappeler le couvercle vers sa position d'ouverture.

L'élément de rappel assure un maintien du couvercle dans sa position d'ouverture lors d'un nettoyage au lave-vaisselle du dispositif de distribution d'une boisson, de sorte à assurer notamment un lavage adéquat de la sortie du port d'amenée de liquide et de l'ouverture de la chambre de traitement sur la face principale.

Selon certaines variantes de réalisation, le couvercle est articulé au corps principal au moyen d'une charnière, et dans la position d'ouverture, le couvercle est éloigné de la face principale, de préférence de sensiblement 180°.

Selon certaines variantes de réalisation, l'élément de rappel est formé par une portion de rappel du joint d'étanchéité, la portion de rappel étant de préférence une extrémité du joint d'étanchéité.

Selon certaines variantes de réalisation, la portion de rappel est une portion du joint d'étanchéité configurée pour être en saillie verticale par rapport au reste du joint d'étanchéité et/ou à la face principale lorsque le couvercle est en position d'ouverture et pour être affleurant avec la face principale et/ou le reste du joint d'étanchéité lorsque le couvercle est en position d'obturation.

Selon certaines variantes de réalisation, le dispositif de distribution comprend en outre une chambre de mélange reliée fluidiquement à la chambre de traitement et le joint d'étanchéité s'étend autour :
- d'un conduit d'écoulement principal, le conduit d'écoulement principal s'étendant entre, d'une part, une sortie d'un canal d'amenée d'eau et/ou vapeur sur la face principale et, d'autre part, une extrémité aval de la chambre de traitement, et
- d'une ouverture de la chambre de mélange sur la face principale,
la portion de rappel s'étendant depuis une zone du joint d'étanchéité située autour de l'ouverture de la chambre de mélange, la portion de rappel s'étendant préférentiellement, dans la position d'obturation du couvercle, sensiblement parallèlement à une direction principale de la chambre de traitement.

Selon certaines variantes de réalisation, la portion de rappel comprend un matériau élastiquement déformable et est configurée pour adopter une position de repos dans la position d'ouverture du couvercle et pour adopter une position déformée par rapport à la position de repos dans la position d'obturation du couvercle, la portion de rappel faisant saillie de la face principale dans la position d'ouverture du couvercle.

Selon certaines variantes de réalisation, la face principale comprend un logement de réception de l'élément de rappel apte à recevoir intégralement l'élément de rappel lorsque le couvercle se trouve dans sa position d'obturation.

Selon certaines variantes de réalisation, le corps principal ou le couvercle comprend une rainure dans laquelle est disposé au moins en partie le joint d'étanchéité.

Selon certaines variantes de réalisation, le logement de réception présente une épaisseur perpendiculairement à la face principale supérieure à une épaisseur de la rainure perpendiculairement à la face principale.

Selon certaines variantes de réalisation, le logement de réception est situé dans le prolongement de la rainure.

Selon certaines variantes de réalisation, l'élément de rappel est choisi parmi un ressort de torsion concentrique avec une charnière via laquelle le couvercle est articulé au corps principal, une lamelle en plastique, une bille ressort ou un ressort de compression.

Selon certaines variantes de réalisation, le dispositif de distribution comprend une partie de mélange, la partie de mélange comprenant la chambre de traitement et une chambre de mélange située en aval de la chambre de traitement selon un sens normal de circulation du liquide dans la partie de mélange, la chambre de mélange étant munie d'un orifice de sortie de la boisson, la partie de mélange comprenant un conduit d'écoulement principal comportant une restriction de section, une première portion de conduit du conduit d'écoulement principal étant située en amont de la restriction de section et s'étendant jusqu'à la restriction de section, et une deuxième portion de conduit du conduit d'écoulement principal étant située en aval de la restriction de section et s'étendant depuis la restriction de section, la deuxième portion de conduit formant la chambre de traitement.

Selon certaines variantes de réalisation, la partie de mélange comprend :
- un canal d'amenée d'eau et/ou de vapeur s'étendant entre un port d'amenée d'eau et/ou de vapeur et la première portion de conduit,
- le canal d'amenée de liquide s'étendant entre un port d'amenée de liquide et le conduit d'écoulement principal, et
- un canal d'amenée d'air s'étendant entre un port d'amenée d'air et le conduit d'écoulement principal.

Selon certaines variantes de réalisation, le canal d'amenée d'air et le canal d'amenée de liquide débouchent dans le conduit d'écoulement principal au niveau de la restriction de section, de préférence directement en aval de la restriction de section au niveau d'une extrémité amont de la deuxième portion de conduit.

Selon certaines variantes de réalisation, la chambre de traitement est une chambre de moussage et la boisson est une boisson moussée.

La présente divulgation porte, selon un autre aspect, sur un appareil de production d'une boisson comprenant une tête de distribution configurée pour recevoir de manière amovible un dispositif de distribution d'une boisson tel que défini précédemment.

Selon certaines variantes de réalisation, la tête de distribution comprend un rail, de préférence deux rails, le rail étant configuré pour permettre une insertion du dispositif de distribution d'une boisson selon une direction d'insertion parallèle au rail, le rail étant configuré pour maintenir le couvercle dans sa position d'obturation lorsque le dispositif de distribution d'une boisson est disposé dans la tête de distribution.

Selon certaines variantes de réalisation, le rail définit une position extrémale d'insertion du dispositif de distribution dans la tête de distribution, et l'appareil de production de boisson comprend un levier de maintien mobile entre :
- une position verrouillée, dans laquelle le levier de maintien empêche un retrait du dispositif de distribution hors de la position extrémale d'insertion, et
- une position déverrouillée, dans laquelle le levier de maintien permet un retrait du dispositif de distribution hors de la position extrémale d'insertion et hors de la tête de distribution

### DESCRIPTION DES FIGURES

D'autres caractéristiques, buts et avantages ressortiront de la description qui suit, qui est purement illustrative et non limitative, et qui doit être lue en regard des dessins annexés sur lesquels :
[Fig. 1] illustre schématiquement un appareil de production d'une boisson.
[Fig. 2a] illustre schématiquement un dispositif de distribution d'une boisson pouvant être utilisé au sein de l'appareil de production de boisson, dans une position insérée dans un tête de distribution de l'appareil de production de boisson.
[Fig. 2b] illustre schématiquement le dispositif de distribution d'une boisson de la figure 2a.
[Fig. 2c] illustre schématiquement le dispositif de distribution d'une boisson de la figure 2a, inséré dans la tête de distribution, selon une vue alternative.
[Fig. 2d] illustre schématiquement le dispositif de distribution d'une boisson de la figure 2a, inséré dans la tête de distribution, selon une vue alternative.
[Fig. 3a] illustre schématiquement l'agencement d'un système de distribution de fluide du dans l'appareil de production de boisson, selon un premier mode de réalisation.
[Fig. 3b] illustre schématiquement l'agencement du système de distribution de fluide du dans l'appareil de production de boisson, selon un deuxième mode de réalisation.

Sur l'ensemble des figures, les mêmes éléments ou des éléments similaires sont désignés par des références identiques.

### DESCRIPTION DÉTAILLÉE DE MODES DE RÉALISATION

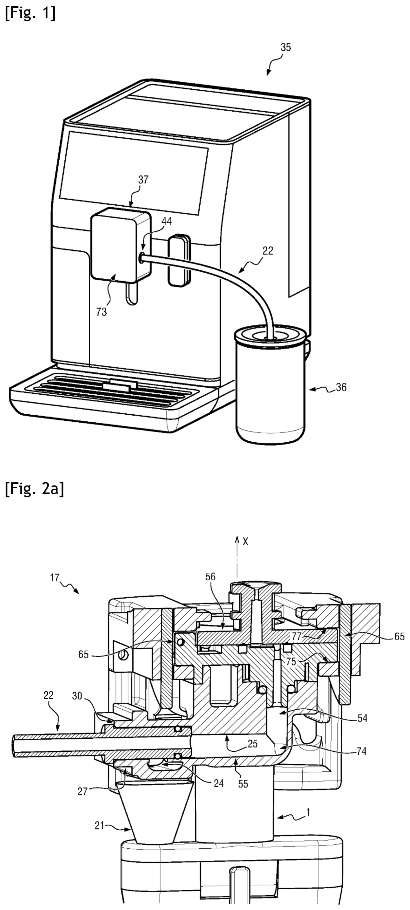

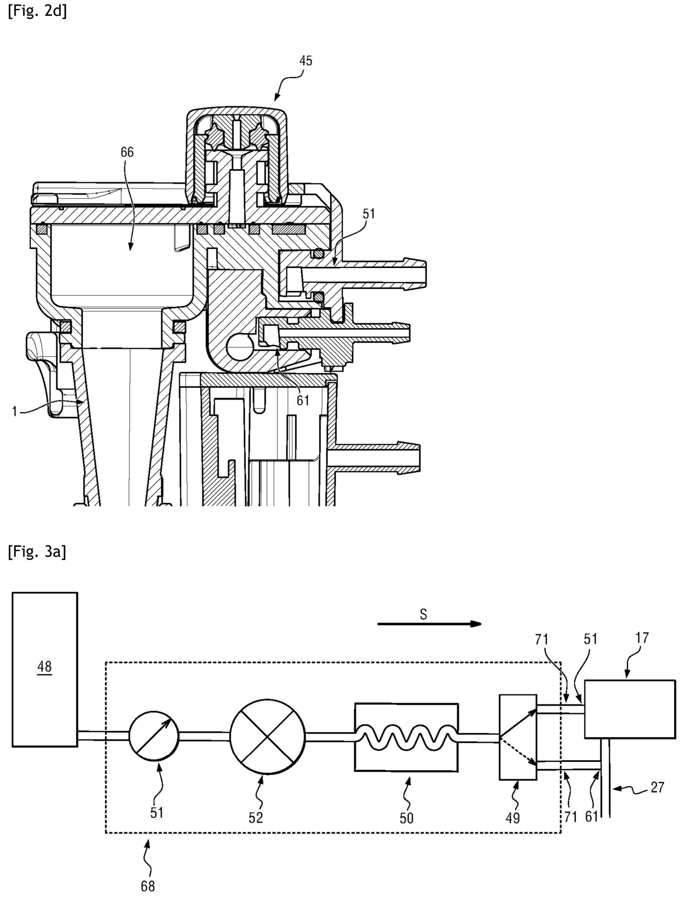

Un appareil de production 35 d'une boisson, illustré à titre d'exemple sur la figure 1, comprend une tête de distribution 37. La tête de distribution 37 est prévue pour accueillir, dans un logement prévu à cet effet, un dispositif de distribution de boisson 17, illustré notamment sur les figures 2a à 2d. De préférence, le dispositif de distribution 17 est accueilli dans la tête de distribution 37 de manière amovible.

L'appareil de production 35 est notamment un appareil de production de café. Dans ce mode de réalisation, la tête de distribution 37 comprend au moins une buse de distribution de café vers un récipient.

L'appareil de production 35 comprend également une première sortie de distribution d'eau/vapeur 47 qui débouche avantageusement dans la tête de distribution 37.

Avantageusement, l'appareil de production 35 comprend également une deuxième sortie de distribution d'eau/vapeur 46 qui débouche avantageusement également dans la tête de distribution 37.

En variante, la première sortie de distribution d'eau et/ou de vapeur 47 et la deuxième sortie de distribution d'eau/vapeur 46 débouchent sur une face avant de l'appareil de production à l'écart de la tête de distribution 37.

Le dispositif de distribution de boisson 17 comprend un corps principal 62.

Le dispositif de distribution de boisson comprend une sortie de boisson, prévue pour acheminer une boisson depuis un orifice de sortie d'une chambre de mélange 66 dans laquelle la boisson est mélangée vers un insert de distribution 1. La chambre de mélange 66 elle-même est de préférence reliée fluidiquement à une chambre de traitement 16 destinée à permettre un traitement d'un liquide non traité de sorte à obtenir la boisson.

La chambre de traitement 16 est directement en amont de la chambre de mélange 66 selon un sens normal d'écoulement du liquide. La chambre de mélange 66 ainsi que la chambre de traitement 16 font toutes deux partie d'une partie de mélange du dispositif de distribution de boisson 17.

L'insert de distribution 1 est fixé à la sortie de boisson du dispositif de distribution de boisson 17, de préférence de manière amovible de sorte à permettre un nettoyage plus aisé de l'insert de distribution 1 et du dispositif de distribution 17, indépendamment l'un de l'autre. Toutefois, selon certains modes de réalisation, l'insert de distribution 1 est solidaire du dispositif de distribution 17.

L'axe X définit une direction de hauteur du dispositif de distribution de boisson 17 et, plus généralement, de l'appareil de production de boisson 35, ainsi que de l'insert de distribution 1, cet axe X étant disposé verticalement dans la position normale d'utilisation du dispositif de distribution de boisson 17.

Selon certains modes de réalisation, la chambre de traitement 16 peut être une chambre de moussage, le liquide non moussé étant moussé dans la chambre de traitement 16 avant de rejoindre la chambre de mélange 66 pour y être mélangé, et donc homogénéisé, puis de s'écouler à travers la sortie de boisson, sous la forme d'une boisson moussée. Le liquide s'écoule ensuite dans l'insert de distribution 1 afin d'être distribué dans un récipient placé en dessous de la tête de distribution 37.

La chambre de traitement 16 est alimentée par un canal d'amenée de liquide 74, alimenté lui-même par un port d'amenée de liquide 27 du dispositif de distribution de boisson 17. Le canal d'amenée de liquide 74 débouche sur une sortie dans une face principale 60 du corps principal 62 du distributeur de boisson 17.

La chambre de traitement 16 est également ouverte sur la face principale 60.

La chambre de traitement 16 est en outre alimentée par un canal d'amenée d'eau et/ou vapeur alimenté par un port d'amenée de d'eau et/ou de vapeur 51 du dispositif de distribution 17. Le port d'amenée d'eau et/ou de vapeur 51 est préférentiellement un port d'amenée de vapeur ou d'eau chaude et en variante un port d'amenée de vapeur ou d'eau chaude ou froide.

La fixation du dispositif de distribution 17 à l'appareil de production de boisson 35 peut être assurée, au moins partiellement, par le biais d'une fixation/connexion du port d'amenée d'eau et/ou de vapeur 51 sur la première sortie d'eau et/ou de vapeur 47 de l'appareil de production 35Le canal d'amenée de liquide 74 présente une surface interne 25.

Le canal d'amenée de liquide 74 comprend, selon certains modes de réalisation, une première portion 54 sensiblement verticale lorsque le dispositif de distribution 17 est dans sa position normale d'utilisation. La première portion 54 est reliée fluidiquement à la partie de mélange du dispositif de distribution 17. Une deuxième portion 55 du canal d'amenée de liquide, sensiblement horizontale dans la position normale d'utilisation du dispositif de distribution 17, est reliée au port d'amenée de liquide 27 à sa première extrémité et à la première portion 54 à sa deuxième extrémité.

Le port d'amenée de liquide 27 peut quant à lui être relié par le biais d'une conduite d'amenée de liquide 22 à un réservoir 36 configuré pour accueillir un liquide non moussé, tel que du lait voire du café, qui est destiné à être moussé dans la chambre de traitement 16. La tête de distribution 37 comprend un orifice de passage 44 destiné à permettre le passage de la conduite d'amenée de liquide 22 dans la tête de distribution 37, afin qu'elle puisse être reliée au port d'amenée de liquide 27 du dispositif de distribution de liquide 17.

De préférence, la conduite d'amenée de liquide 22 est amovible par rapport au port d'amenée de liquide 27.

Le dispositif de distribution 17 comprend en outre un port d'amenée d'air alimentant un canal d'amenée d'air, ce canal débouchant sur une sortie 31 située en amont de la chambre de traitement 16.

Dans le cas où la chambre de traitement 16 est une chambre de moussage, le canal d'amenée d'eau et/ou de vapeur alimente un conduit d'écoulement principal qui comprend une restriction de section 67, la sortie 31 du canal d'amenée d'air et la sortie du canal d'amenée de liquide débouchant toutes deux directement en aval de la restriction de section 67, à une extrémité amont de la deuxième portion de conduit formant la chambre de traitement 16.

Notamment, le conduit d'écoulement principal comprend une première portion de conduit 70 située en amont de la restriction de section 67 selon le sens normal d'écoulement de l'eau et/ou de la vapeur, ainsi qu'une deuxième portion de conduit située en aval de la restriction de section 67. La deuxième portion de conduit définit ainsi la chambre de traitement 16 dans laquelle sont mélangés l'eau chaude/vapeur, le liquide et l'air avant leur entrée dans la chambre de mélange 66.

Par exemple, dans une position d'utilisation du dispositif de distribution 17, la sortie 31 du port d'amenée d'air débouche latéralement dans le conduit d'écoulement principal, tandis que le canal d'amenée de liquide débouche verticalement, par-dessous, dans le conduit principal, en aval de la restriction de section 67.

La restriction de section 67 permet une aspiration du liquide et de l'air afin de permettre leur mélange avec l'eau et/ou vapeur dans la chambre de traitement 16 de sorte à produire un liquide moussé.

Puis, un canal de sortie 69 de la chambre de traitement 16 débouche dans la chambre de mélange 66 selon une trajectoire tangentielle, de sorte à permettre un mélange additionnel du liquide moussé et donc une homogénéisation de celui-ci dans la chambre de mélange 66.

La chambre de traitement 16 peut, non limitativement, être une chambre de moussage de lait et cacao, de lait et chocolat en poudre, de lait et sirop, ou encore de café et cacao.

Le port d'amenée de liquide 27 peut déboucher sur une face latérale du dispositif de distribution de boisson 17. De préférence, il débouche sur une face distincte d'une face dite face « arrière » 72 du dispositif de distribution 17, la face arrière 72 formant, dans la position normale d'utilisation du dispositif de distribution 17, une autre face latérale du dispositif de distribution. Lorsque le dispositif de distribution 17 est monté dans la tête de distribution, la face latérale arrière 72 se trouve d'un côté du dispositif de distribution 17 à une face dite « avant » se trouvant au contact d'une face avant 73 de la tête de distribution 37, cette face avant 73 étant configurée pour faire face à l'utilisateur lorsqu'il utilise l'appareil de production de boisson 35.

Le port d'amenée de liquide 27 est de préférence en saillie d'une face latérale du dispositif de distribution 17 distincte de la face arrière 72.

La sortie du canal d'amenée de liquide est de préférence située à une position verticale plus élevée, dans la position normale d'utilisation du dispositif de distribution de boisson 17, que l'entrée 30 du port d'amenée de liquide 27, de sorte à éviter, du fait de la gravité, l'écoulement intempestif de liquide à travers le canal d'amenée de liquide 74 puis dans le conduit d'écoulement principal en l'absence de la dépression causée par l'arrivée d'eau et/ou vapeur depuis le port d'amenée d'eau et/ou vapeur 51.

L'appareil de production de boisson 35 comprend en outre, selon certaines variantes, un port d'amenée de boisson chaude 3, 'débouchant dans la tête de distribution 37 et permettant l'acheminement d'une boisson additionnelle, indépendamment de la boisson s'écoulant depuis la chambre de mélange 66, vers une buse de distribution indépendante de celle permettant la distribution de la boisson s'écoulant depuis la chambre de mélange 66.

Par exemple, le port d'amenée de boisson chaude 3 et la buse de distribution à laquelle il est relié sont indépendants du dispositif de distribution de boisson 17.

Le port d'amenée de boisson chaude 3 est notamment configuré pour recevoir du café.

### Port de nettoyage et système de distribution de fluide

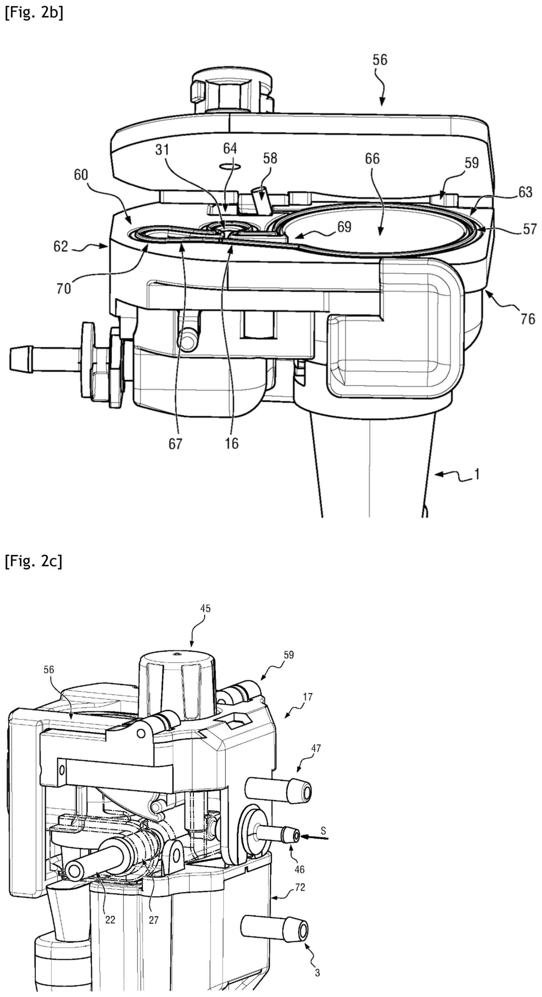

Tel qu'illustré à titre exemplatif sur la figure 2c, le dispositif de distribution de boisson 17 comprend un port de nettoyage 61 muni d'une extrémité débouchant sur la surface interne 25 du canal d'amenée de liquide 74. Le port de nettoyage 61 configuré pour permettre le passage d'un fluide de nettoyage, notamment de l'eau chaude, dans le canal d'amenée de liquide 74 de sorte à permettre un nettoyage efficace du canal d'amenée de liquide 74 et du port d'amenée de liquide 27.

Le port de nettoyage 61 est configuré pour être fixé/connecté sur la deuxième sortie d'eau et/ou de vapeur 46 de l'appareil de production 35.

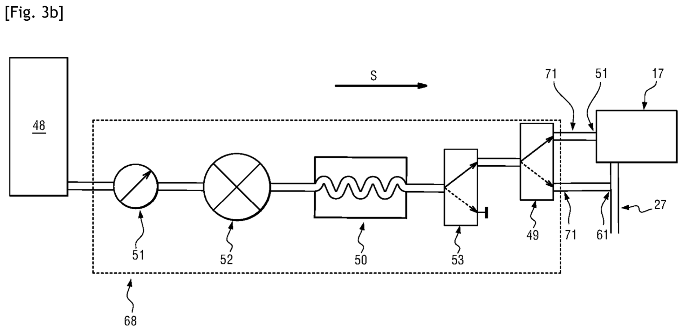

Le port de nettoyage 61 et le port d'amenée d'eau et/ou de vapeur 51 sont configurés pour être fluidiquement reliés à un système de distribution de fluide 68 illustré notamment sur les figures 3a et 3b lorsqu'ils sont connectés respectivement à la deuxième sortie d'eau et/ou de vapeur 46 et à la première sortie d'eau et/ou de vapeur 47.

Le port de nettoyage 61 et le port d'amenée d'eau et/ou de vapeur 51 permettent, à eux deux, un nettoyage de l'ensemble des ports et canaux du dispositif de distribution 17 : le port d'amenée d'eau et/ou de vapeur 51 permet le nettoyage du conduit principal et des chambres de traitement 16 et de mélange 66, tandis que le passage d'eau dans le port de nettoyage 61 permet le nettoyage du port d'amenée de liquide 27, et éventuellement de la conduite d'amenée de liquide 22 lorsque celle-ci est couplée au port d'amenée de liquide 27.

Le système de distribution de fluide 68 comprend un régulateur de débit 49 relié fluidiquement, et de manière indépendante, d'une à la première sortie d'eau et/ou de vapeur 47 et, d'autre part, à la deuxième sortie d'eau et/ou de vapeur 46. Le régulateur de débit est configuré pour pouvoir se déplacer entre deux positions :
- une première position, dans laquelle le régulateur de débit 49 empêche un passage de fluide vers la deuxième sortie d'eau et/ou de vapeur 46 et donc le port de nettoyage 61 et dans laquelle le régulateur de débit 49 permet le passage du fluide vers la première sortie d'eau et/ou de vapeur 47 et donc le port d'amenée d'eau et/ou vapeur 51, et
- une deuxième position, dans laquelle le régulateur de débit permet le passage du fluide vers la deuxième sortie d'eau et/ou de vapeur 46 et donc le port de nettoyage 61 et empêche le passage du fluide vers la première sortie d'eau et/ou de vapeur 47 et donc le port d'amenée d'eau et/ou vapeur 51.

Le régulateur de débit 49 est notamment une vanne, telle qu'une électrovanne.

Afin de permettre son alimentation en fluide, le système de distribution de fluide 68 est raccordé fluidiquement à un réservoir 48 de fluide, le réservoir 48 étant situé en amont du système de distribution de fluide 68 selon un sens normal S d'écoulement du fluide vers le port d'amenée de liquide 27 via la deuxième sortie d'eau et/ou de vapeur 46 et le port de nettoyage 61, ou vers le port d'amenée d'eau chaude et/ou de vapeur 51 via la première sortie d'eau et/ou de vapeur 47 selon la position dans laquelle se trouve le régulateur de débit 49.

Avantageusement le réservoir 48 est le réservoir d'eau de l'appareil de production de boisson 35 qui permet également d'alimenter en eau l'appareil 35 pour réaliser du café.

Le système de distribution de fluide 68 et plus particulièrement le régulateur de débit 49 permettent un nettoyage efficace du canal d'amenée de liquide sans pour autant qu'il soit nécessaire de prévoir une source de fluide indépendante de celle utilisée pour alimenter le port d'amenée d'eau chaude et/ou vapeur 51, et notamment sans qu'il soit nécessaire à l'utilisateur de raccorder un réservoir au port d'amenée de liquide 27 en prévision d'un nettoyage du canal d'amenée de liquide. En outre, le canal d'amenée de liquide peut être nettoyé régulièrement sans qu'il soit nécessaire de désassembler le dispositif de distribution 17.

Notamment, pour les modes de réalisation dans lesquels le port d'amenée de liquide 27 est configuré pour recevoir du lait, le régulateur de débit 49 permet avantageusement le nettoyage de l'ensemble des portions du dispositif de distribution 17 ayant été en contact avec du lait, et donc susceptibles d'être bloquées ou au moins partiellement obturées par la présence de lait séché. En effet, le régulateur de débit 49 permet, dans sa première position, un nettoyage de la partie de mélange comprenant la chambre de traitement 16 et la chambre de mélange 66 via la première sortie d'eau et/ou de vapeur 47 et le port d'amenée d'eau chaude et/ou vapeur 51 - la chambre de traitement 16 et la chambre de mélange 66 étant toutes deux amenées à être en contact avec du lait. Le régulateur de débit 49 permet en outre, dans sa deuxième position, le nettoyage du port d'amenée de liquide 27 et du canal d'amenée de liquide 74 via la deuxième sortie d'eau et/ou de vapeur 46 et le port de nettoyage 61, le port d'amenée de liquide 27 et le canal d'amenée de liquide 74 étant eux aussi susceptibles d'être obturés par du lait séché en l'absence d'un nettoyage régulier.

Selon certains modes de réalisation, le port d'amenée d'eau chaude et/ou de vapeur 51 est agencé au-dessus du port de nettoyage 61 dans la position d'utilisation du dispositif de distribution 17. Ceci diminue le risque que, lors d'un nettoyage du canal d'amenée de liquide grâce au port de nettoyage 61, du fluide traversant le port de nettoyage 61 n'entre involontairement dans le conduit d'amenée d'eau et/ou vapeur, et/ou dans d'autres conduits fluidiquement reliés à celui-ci, sous l'effet de la gravité. Le nettoyage opéré grâce au port de nettoyage 61 reste ainsi confiné autant que possible au port d'amenée de liquide 27 et au canal d'amenée de liquide 74.

Le port de nettoyage 61 et le port d'amenée d'eau chaude et/ou de vapeur 51 peuvent tous deux déboucher sur la face arrière 72 du dispositif de distribution 17.

De préférence, le port de nettoyage 61 et le port d'amenée d'eau chaude et/ou de vapeur 51 s'étendent tous deux en saillie de la face arrière 72.

Préférentiellement, le fluide contenu dans le réservoir 48 est de l'eau. Le système de distribution de fluide 68 comprend un élément chauffant 50 situé entre le réservoir 48 et le régulateur de débit 49, cet élément chauffant 50 étant configuré pour chauffer l'eau provenant du réservoir 48 avant son arrivée dans le régulateur de débit 49.

La présence du régulateur de débit 49 est avantageuse dans ce contexte : en l'absence du régulateur de débit 49, un nettoyage de la partie de mélange pourrait éventuellement être effectué via le port d'amenée d'eau chaude et/ou de vapeur 51. Toutefois, une fois ce nettoyage terminé, la vapeur transmise au port d'amenée d'eau chaude et/ou de vapeur 51 par le système de distribution de fluide 68, issue du chauffage de l'eau provenant du réservoir 48 par l'élément chauffant 50, pourrait causer un fonctionnement non voulu de la partie de mélange. Au contraire, le régulateur de débit 49 permet de rediriger, après un tel nettoyage, le flux d'eau vers le port de nettoyage 61 et d'empêcher tout passage de vapeur vers le port d'amenée d'eau et/ou de vapeur 51, et ainsi tout réamorçage intempestif de la partie de mélange.

En outre, comme on le verra par la suite, il est possible qu'un utilisateur soit amené à placer une extrémité de la conduite d'amenée de liquide 22, opposée à l'extrémité raccordée au port d'amenée de liquide 27, dans un récipient de sorte à permettre l'évacuation du fluide de nettoyage lors d'un nettoyage du canal d'amenée de liquide. Dans ce cas, le régulateur de débit 49 empêche une remontée non souhaitable de liquide dans le dispositif de distribution 17 via la conduite d'amenée de liquide 27, qui pourrait, en l'absence du régulateur de débit 49, avoir lieu par aspiration lorsque de la vapeur résiduelle circule à travers le canal d'amenée d'eau et/ou de vapeur.

L'appareil de production de boisson 35 comprend deux canaux de circulation d'eau chaude et/ou de vapeur 71, chaque canal de circulation 71 se trouvant en aval du régulateur de débit 49 selon le sens normal d'écoulement S dans le dispositif de distribution de fluide 68, et chaque canal de circulation 71 étant relié fluidiquement au régulateur de débit 49. Un des deux canaux de circulation 71 est relié, en aval dudit canal de circulation 71, au port d'amenée d'eau chaude et/ou vapeur 51 via la première sortie d'eau et/ou de vapeur 47, tandis que l'autre des deux canaux 71 est relié, en aval de celui-ci, au port de nettoyage 61 via la deuxième sortie d'eau et/ou de vapeur 46.

Le système de distribution de fluide 68 comprend en outre, selon certaines variantes, une pompe 52 apte à forcer le passage du fluide du réservoir 48 vers l'élément chauffant 50 et vers le régulateur de débit 49.

Selon un mode de réalisation spécifique illustré notamment sur la figure 3b, le système de distribution de fluide 68 comprend, en amont du régulateur de débit 49 selon le sens normal de circulation S, une vanne de fermeture 53 propre à sélectivement permettre ou empêcher, au moins partiellement, voire entièrement, le passage du fluide provenant du réservoir 48 vers le régulateur de débit 49. La vanne de fermeture 53 est notamment une électrovanne.

La vanne de fermeture 53 permet de fermer sélectivement toute connexion fluidique entre le système de distribution de fluide 68 et le dispositif de distribution 17.

Par exemple, la vanne de fermeture 53 peut être configurée pour permettre le passage du fluide provenant du réservoir 48 vers le régulateur de débit 49 lorsque la pression du fluide est supérieure à une valeur seuil, et pour empêcher le passage du fluide provenant du réservoir 48 vers le régulateur de débit 49 lorsque la pression du fluide est inférieure à la valeur seuil. Ainsi, il est garanti que la connexion fluidique entre le système de distribution de fluide 68 et le dispositif de distribution 17 n'est établie que lorsque la pression du fluide est suffisante pour assurer un fonctionnement adéquat du dispositif de distribution 17, et donc une qualité adéquate de la boisson issue de la chambre de mélange 66 - en l'absence de la vanne de fermeture 53, de la boisson pourrait en effet continuer à s'écouler depuis la sortie de distribution du dispositif 17 avec un débit d'eau/chaude ou de vapeur d'eau trop faible pour assurer un traitement optimal dans la partie de traitement et dans la partie de mélange.

En outre, la présence de la vanne de fermeture 53 permet également d'empêcher un écoulement intempestif d'eau vers le port d'amenée d'eau et/ou de vapeur 51 entre plusieurs utilisations successives du dispositif de distribution 17.

Le dispositif de distribution 17 comprend, selon certaines variantes, un moyen de sélection 45 du débit d'air s'écoulant à travers le port d'amenée d'air. Ceci permet à l'utilisateur de changer à volonté la texture de la boisson s'écoulant hors de la partie de mélange du dispositif de distribution 17.

L'utilisation d'un moyen de sélection 45 est permise dans des conditions avantageuses par le dispositif de distribution de fluide 68. En effet, certains dispositifs de l'art antérieur utilisent un circuit de passage d'air du dispositif pour faire passer un fluide de nettoyage. Or, le dispositif proposé ici s'affranchit de cette contrainte grâce au port de nettoyage 61 et au régulateur de débit 49 - il est donc possible de permettre à un utilisateur de modifier le débit d'air à travers le port d'amenée d'air sans risquer d'entraver le passage d'un fluide de nettoyage, puisque le port d'amenée d'air n'est pas utilisé pour faire passer un tel fluide.

Le moyen de sélection 45 peut notamment prendre la forme d'un bouton disposé sur une paroi externe du dispositif de distribution 17, tel qu'un bouton actionnable manuellement. Notamment, le moyen de sélection 45 peut être un bouton de type sélecteur rotatif, permettant de choisir un débit d'air entre un débit minimum correspondant à une première position extrémale du moyen de sélection 45, et un débit maximum correspondant à une deuxième position extrémale du moyen de sélection 45.

Le moyen de sélection 45 est notamment agencé sur une face supérieure du dispositif de distribution de boisson 17.

L'appareil de production de boisson 35 est, selon un mode de réalisation, propre à être mis dans un mode de nettoyage du dispositif de distribution, dans lequel un organe de contrôle du régulateur de débit 49 commande alternativement le régulateur de débit 49 entre sa première et sa deuxième position.

Éventuellement, l'organe de contrôle est configuré pour faire alterner la position du régulateur de débit 49 de manière répétée entre la première position et la deuxième position. Ainsi, un nettoyage est effectué à intervalles réguliers - le régulateur de débit 49 étant alors dans sa deuxième position - entre des phases où l'appareil de production de boisson 35 est prêt à être utilisé pour distribuer une boisson - le régulateur de débit 49 étant alors dans sa première position.

Selon un mode de réalisation, un orifice d'évacuation 24 débouche sur la surface interne 25 du canal d'amenée de liquide 74. L'orifice d'évacuation 24 débouche dans la deuxième portion 55 du canal d'amenée de liquide 74 configurée pour recevoir la conduite d'amenée de liquide 22, de sorte que, lorsque la conduite d'amenée de liquide 22 est insérée dans le port d'amenée de liquide 27, l'orifice d'évacuation 24 est obturé par une surface externe de la conduite d'amenée de liquide 22, et n'interfère pas avec le passage du liquide dans le port d'amenée de liquide 27.

De préférence, l'orifice d'évacuation 24 débouche sur une moitié inférieure de la surface interne 25 dans une position normale d'utilisation du dispositif de distribution 17, de sorte à faciliter l'engouffrement du liquide dans l'orifice d'évacuation 24 sous l'effet de la gravité.

En revanche, lorsque la conduite d'amenée de liquide 22 n'est pas logée dans le port d'amenée de liquide 27, l'orifice d'évacuation 24 est libre. Lorsqu'un liquide circule dans le canal d'amenée de liquide selon un sens opposé au sens normal d'écoulement du liquide dans le canal d'amenée de liquide, l'orifice d'évacuation 24 permet que ce liquide soit évacué du canal d'amenée de liquide avant d'arriver jusqu'au port d'amenée de liquide 27. En effet, en l'absence de l'orifice d'évacuation 24, un tel liquide serait susceptible de s'écouler en dehors du port d'amenée de liquide 27 et de se répandre soit sur un plan de travail sur lequel est disposé l'appareil de distribution 35, soit sur des mains d'un utilisateur.

Notamment, un tel écoulement de liquide selon un sens opposé au sens de circulation normal dans le canal d'amenée de liquide se produit lors d'un nettoyage du canal d'amenée de liquide effectué au moyen d'eau et/ou de vapeur acheminée dans le canal d'amenée de liquide via le port de nettoyage 61.

L'orifice d'évacuation 24 est agencé de sorte à permettre l'évacuation de liquide s'écoulant dans le canal d'amenée de liquide 74 vers une buse d'évacuation. L'orifice d'évacuation 24 est ainsi fluidiquement relié à la buse d'évacuation. Par « fluidiquement relié », on entend toute liaison permettant d'acheminer le liquide depuis l'entrée de l'orifice d'évacuation 24 jusqu'à la buse d'évacuation. Notamment, une telle liaison fluidique comprend une liaison par une conduite continue, mais également une liaison discontinue, c'est-à-dire que la liaison fluidique peut être assurée par un ensemble constitué d'une conduite apte à être alimentée par l'orifice d'évacuation 24 et d'un canal de réception 21 débouchant au droit de la conduite et alimentant la buse d'évacuation, le canal de réception 21 n'étant pas continu avec la conduite.

Lors d'un nettoyage du canal d'amenée de liquide grâce au port de nettoyage 61, il peut être avantageux de placer l'extrémité de la conduite d'amenée de liquide 22 qui n'est pas reliée au port d'amenée de liquide 27 - l'autre extrémité restant raccordée au port d'amenée de liquide 27 - dans un récipient vide, de sorte à permettre l'évacuation du fluide de nettoyage en dehors du port d'amenée de liquide 27.

À cet effet, l'appareil de production d'une boisson 35 peut comprendre un plateau d'accueil du récipient prévu pour accueillir la boisson produite, le plateau d'accueil comprenant une portion d'accueil de liquide formant un tel récipient vide destiné à l'accueil de fluide de nettoyage.

### Couvercle articulé

Le dispositif de distribution de boisson 17 est muni d'un couvercle 56, articulé au moyen d'une charnière 59 par rapport au corps principal 62.

Le couvercle est configuré pour pouvoir adopter une position dite « d'obturation », dans laquelle il est au contact de la face principale 60, et empêche donc tout accès au conduit principal d'écoulement, et donc à la chambre de traitement 16, ainsi qu'à la chambre de mélange 66.

Le couvercle 56 est également configuré pour pouvoir adopter une position dite « d'ouverture », illustrée notamment sur la figure 2b, dans laquelle il se trouve à l'écart de la face principale 60 et permet un accès au conduit principal d'écoulement, et donc à la chambre de traitement 16, ainsi qu'à la chambre de mélange 66.

Préférentiellement, la charnière 59 permet un écartement du couvercle 56 par rapport à la face principale 60 pouvant aller jusqu'à environ 180°, de sorte à permettre un accès aisé aux différents canaux accessibles depuis la face principale 60 à des doigts d'un utilisateur, par exemple pour un nettoyage manuel de la face principale 60.

De sorte à empêcher, en position d'obturation du couvercle 56, un débordement de liquide, d'eau chaude ou de vapeur hors du dispositif de distribution 17, un joint d'étanchéité 57 entoure au moins certaines ouvertures disposées dans la face principale 60. Le joint d'étanchéité 57 est porté soit par le couvercle 56, soit par la face principale 60.

Notamment, la chambre de mélange 66 et le conduit d'écoulement principal peuvent tous deux êtres ouverts sur la face principale 60, une ouverture 63 de la chambre de mélange 66 sur la face principale 60 communicant directement avec la chambre de traitement 16 - elle aussi ouverte sur la face principale 60 - par l'intermédiaire du canal de sortie 69 de la chambre de traitement 16. Le joint d'étanchéité 57 peut dans ce cas entourer l'ensemble formé par l'ouverture du conduit d'écoulement principal (dont l'ouverture de la chambre de traitement 16) et l'ouverture 63 de la chambre de mélange 66.

Un élément de rappel est prévu dans le dispositif de distribution 17, et est configuré pour rappeler, en l'absence d'une sollicitation extérieure, le couvercle 56 vers sa position d'ouverture. De cette façon, lors d'un retrait du dispositif de distribution 17 de la tête de distribution en vue notamment du nettoyage du dispositif de distribution 17 et de préférence d'une mise au lave-vaisselle du dispositif de distribution 17 (ou uniquement de son corps principal 62), le couvercle 56 reste à l'écart de la face principale 60 et n'empêche pas un nettoyage optimal des ouvertures présentes dans celle-ci. En particulier lorsque le dispositif de distribution 17 a préalablement été utilisé pour une préparation à base de lait, un tel nettoyage permet d'éliminer le lait séché dans les différents canaux et conduits du dispositif de distribution 17. On conserve ainsi de meilleures performances du dispositif de distribution 17 dans le temps.

Selon certains modes de réalisation, l'élément de rappel prend la forme d'un ressort.

Il peut notamment s'agir d'un ressort de compression solidarisé à l'un ou l'autre de la face principale 60 et du couvercle 56, et prenant appui sur l'autre de la face principale 60 ou du couvercle 56 lors d'un passage du couvercle 56 vers sa position d'obturation.

L'élément de rappel peut alternativement être un ressort de torsion dont l'axe principal est un axe principal de la charnière 59.

L'élément de rappel peut également être une lamelle en plastique s'inscrivant, dans une position de repos de la lamelle, dans un plan sécant avec la face principale 60.

L'élément de rappel peut également être une bille ressort.

Selon certains modes de réalisation, et comme présenté sur la figure 2b, l'élément de rappel est formé par une portion de rappel 58 du joint d'étanchéité 57. Notamment, une extrémité du joint d'étanchéité 57 forme la portion de rappel 58. Lors d'une fabrication du joint d'étanchéité 57, la portion de rappel 58 est formée, notamment moulée lorsque le joint d'étanchéité 57 est formé dans un matériau élastomérique, de sorte que la portion de rappel 58 s'étende, dans sa position de repos, à l'écart d'un plan dans lequel s'inscrit le reste du joint d'étanchéité 57. De cette façon, lorsque le joint d'étanchéité 57 est disposé dans une rainure prévue à cet effet dans le couvercle 56 ou dans la face principale 60, le joint d'étanchéité se trouve en saillie du couvercle 56 ou de la face principale 60.

Ainsi, en l'absence d'une sollicitation extérieure, la portion de rappel 58 tend à reprendre la forme dans laquelle elle a été formée, notamment moulée, et à rappeler le couvercle 56 dans sa position d'ouverture.

L'utilisation d'une portion de rappel 58 du joint d'étanchéité 57 pour former l'élément de rappel permet avantageusement de s'affranchir de la nécessité d'un élément de rappel distinct du joint d'étanchéité 57. Ceci réduit le coût de fabrication du dispositif de distribution 17. Ceci réduit également la complexité du dispositif de distribution 17, et donc sa fragilité.

Préférentiellement, dans la position d'ouverture du couvercle 56, la portion de rappel 58 se trouve en saillie verticale, dans la position normale d'utilisation du dispositif de distribution 17, par rapport à la face principale 60 ou au couvercle 56.

Préférentiellement, lorsque le joint d'étanchéité 57 est logé dans la face principale 60, la portion de rappel 58 est, dans la position d'obturation du couvercle 56, affleurante avec la face principale 60 et/ou avec le reste du joint d'étanchéité 57.

Lorsque le joint d'étanchéité 57 est logé dans la face principale 60, le joint d'étanchéité 57 comprend, selon certains modes de réalisation, une portion entourant au moins partiellement l'ouverture 63 de la chambre de mélange 66. Dans ce cas, la portion de rappel 58 s'étend éventuellement depuis ladite portion du joint d'étanchéité 57.

Notamment, la portion de rappel 58 s'étend sensiblement parallèlement à une direction principale de la chambre de traitement 16.

La portion de rappel 58 est par exemple située à proximité de la charnière 59, notamment plus proche de la charnière 59 que la chambre de traitement 16. Ceci permet un angle d'ouverture du couvercle 56 plus important, dans la position d'ouverture, que pour une portion de rappel 58 disposée plus loin de la charnière 59 - notamment à une distance de la charnière 59 plus importante qu'une distance entre la charnière 59 et la chambre de traitement 16.

La face principale 60 ou le couvercle 56 comprend, selon certains modes de réalisation, un logement de réception 64 de l'élément de rappel, permettant de recevoir intégralement l'élément de rappel lorsque le couvercle 56 se trouve dans sa position d'obturation. Le logement de réception 64 garantit ainsi que le couvercle 56 puisse venir au contact de la face principale 60 dans sa position d'obturation, sans blocage par l'élément de rappel.

Lorsque l'élément de rappel est formé par la portion de rappel 68 du joint d'étanchéité 57, le logement de réception 64 est prévu pour accueillir la portion de rappel 68.

Le logement de réception 64 présente une épaisseur - définie ici comme une dimension perpendiculairement à la face principale 60 (ou, lorsque le joint d'étanchéité 57 est logé dans le couvercle, perpendiculairement au couvercle 56) supérieure à une épaisseur de la rainure dans laquelle est logé le reste du joint d'étanchéité 57.

Selon certains modes de réalisation, le couplage du dispositif de distribution 17 à la tête de distribution 37 est effectué par une insertion du dispositif de distribution 17 dans un rail 65 de la tête de distribution 37. Le rail 65 est configuré pour ne permettre l'insertion du dispositif de distribution 17 dans le rail 65 que lorsque le couvercle 56 se trouve dans sa position d'obturation.

Le rail 65 peut définir une position extrémale d'insertion du dispositif de distribution 17 dans la tête de distribution 37, dans laquelle il est impossible d'insérer davantage le dispositif de distribution 17 dans la tête de distribution 37.

Notamment, le rail 65 comprend une surface de glissement 75 configurée pour être disposée, dans la position normale d'utilisation de l'appareil de production de boisson 35, en dessous d'un épaulement 76 du corps principal 62. Le rail 65 comprend en outre une surface de retenue 77 configurée pour empêcher un passage du couvercle 56 vers sa position d'ouverture lorsque le dispositif de distribution 17 est inséré dans le rail 65.

Le rail 65 permet d'empêcher une ouverture du couvercle 56 lorsque le dispositif de distribution 17 est inséré dans la tête de distribution 37.

De préférence, la tête de distribution 37 comprend deux rails 65 configurés pour recevoir deux faces latérales distinctes du corps principal 62.

Selon certains modes de réalisation, la tête de distribution comprend un levier articulé susceptible de maintenir le dispositif de distribution 17 dans sa position extrémale d'insertion dans la tête de distribution 37. Le levier articulé permet d'assurer un maintien du dispositif de distribution 17 en coopération avec les rails 65.

La présente divulgation concerne en outre un procédé de nettoyage du canal d'amenée de liquide 74 au moyen du système de distribution de fluide 68, dans lequel le régulateur de débit 49 est passé de sa première position à sa deuxième position de sorte à permettre l'alimentation du canal d'amenée de liquide 74 avec un fluide provenant du réservoir 68 et acheminé du réservoir 68 au canal d'amenée de liquide 74 via le système de distribution de fluide 68 et le port de nettoyage 61.

## Revendications

1. Dispositif de distribution d'une boisson (17) comprenant :
un corps principal (62) muni :
• d'un canal d'amenée de liquide (74), une sortie du canal d'amenée de liquide (74) débouchant sur une face principale (60) du corps principal (62), et
• d'une chambre de traitement (16) présentant une ouverture sur la face principale (60),
un couvercle (56) articulé au corps principal (62), le couvercle (56) étant configuré pour sélectivement occuper une position d'obturation dans laquelle il est au contact de la face principale (60), et une position d'ouverture dans laquelle il n'est pas au contact de la face principale (60),
dans lequel l'un parmi le corps principal (62) et le couvercle (56) comprend un joint d'étanchéité (57) entre le corps principal (62) et le couvercle (56), et dans lequel le dispositif de distribution (17) comprend un élément de rappel configuré pour exercer une force de rappel tendant à rappeler le couvercle (56) vers sa position d'ouverture.

2. Dispositif de distribution d'une boisson (17) selon la revendication précédente, dans lequel le couvercle (56) est articulé au corps principal (62) au moyen d'une charnière (59), et dans la position d'ouverture, le couvercle (56) est éloigné de la face principale (60), de préférence de sensiblement 180°.

3. Dispositif de distribution d'une boisson (17) selon l'une quelconque des revendications 1 et 2, dans lequel l'élément de rappel est formé par une portion de rappel (58) du joint d'étanchéité (57), la portion de rappel (58) étant de préférence une extrémité du joint d'étanchéité (57).

4. Dispositif de distribution d'une boisson (17) selon la revendication 3, dans lequel la portion de rappel (58) est une portion du joint d'étanchéité (57) configurée pour être en saillie verticale par rapport au reste du joint d'étanchéité (57) et/ou à la face principale (60) lorsque le couvercle (56) est en position d'ouverture et pour être affleurant avec la face principale (60) et/ou le reste du joint d'étanchéité (57) lorsque le couvercle (56) est en position d'obturation.

5. Dispositif de distribution d'une boisson (17) selon la revendication 4, comprenant en outre une chambre de mélange (66) reliée fluidiquement à la chambre de traitement (16) et dans lequel le joint d'étanchéité (57) s'étend autour :
• d'un conduit d'écoulement principal, le conduit d'écoulement principal s'étendant entre, d'une part, une sortie d'un canal d'amenée d'eau et/ou vapeur sur la face principale (60) et, d'autre part, une extrémité aval de la chambre de traitement (16), et
• d'une ouverture (63) de la chambre de mélange (66) sur la face principale (60),
la portion de rappel (58) s'étendant depuis une zone du joint d'étanchéité (57) située autour de l'ouverture (63) de la chambre de mélange (66), la portion de rappel (58) s'étendant préférentiellement, dans la position d'obturation du couvercle (56), sensiblement parallèlement à une direction principale de la chambre de traitement (16).

6. Dispositif de distribution d'une boisson (17) selon l'une quelconque des revendications 3 à 5, dans lequel la portion de rappel (58) comprend un matériau élastiquement déformable et est configurée pour adopter une position de repos dans la position d'ouverture du couvercle (56) et pour adopter une position déformée par rapport à la position de repos dans la position d'obturation du couvercle (56), la portion de rappel (58) faisant saillie de la face principale (60) dans la position d'ouverture du couvercle (56).

7. Dispositif de distribution d'une boisson (17) selon l'une quelconque des revendications précédentes, dans lequel la face principale (60) comprend un logement de réception (64) de l'élément de rappel apte à recevoir intégralement l'élément de rappel lorsque le couvercle se trouve dans sa position d'obturation.

8. Dispositif de distribution d'une boisson (17) selon l'une quelconque des revendications précédentes, dans lequel le corps principal (62) ou le couvercle (56) comprend une rainure dans laquelle est disposé au moins en partie le joint d'étanchéité (57).

9. Dispositif de distribution d'une boisson (17) selon la revendication précédente prise en combinaison avec la revendication 7, dans lequel le logement de réception (64) présente une épaisseur perpendiculairement à la face principale (60) supérieure à une épaisseur de la rainure perpendiculairement à la face principale (60).

10. Dispositif de distribution d'une boisson (17) selon l'une quelconque des revendications 1 ou 2, dans lequel l'élément de rappel est choisi parmi un ressort de torsion concentrique avec une charnière (59) via laquelle le couvercle (56) est articulé au corps principal (62), une lamelle en plastique, une bille ressort ou un ressort de compression.

11. Dispositif de distribution (17) selon l'une quelconque des revendications précédentes, comprenant une partie de mélange, la partie de mélange comprenant la chambre de traitement (16) et une chambre de mélange (66) située en aval de la chambre de traitement (16) selon un sens normal de circulation du liquide dans la partie de mélange, la chambre de mélange (66) étant munie d'un orifice de sortie de la boisson, la partie de mélange comprenant un conduit d'écoulement principal comportant une restriction de section (67), une première portion de conduit (70) du conduit d'écoulement principal étant située en amont de la restriction de section (67) et s'étendant jusqu'à la restriction de section (67), et une deuxième portion de conduit du conduit d'écoulement principal étant située en aval de la restriction de section (67) et s'étendant depuis la restriction de section (67), la deuxième portion de conduit formant la chambre de traitement (16).

12. Dispositif de distribution (17) selon la revendication précédente, dans lequel la partie de mélange comprend :
• un canal d'amenée d'eau et/ou de vapeur s'étendant entre un port d'amenée d'eau et/ou de vapeur (51) et la première portion de conduit (70),
• le canal d'amenée de liquide (74) s'étendant entre un port d'amenée de liquide (27) et le conduit d'écoulement principal, et
• un canal d'amenée d'air s'étendant entre un port d'amenée d'air et le conduit d'écoulement principal.

13. Dispositif de distribution (17) selon l'une quelconque des revendications précédentes, dans lequel la chambre de traitement (16) est une chambre de moussage et la boisson est une boisson moussée.

14. Appareil de production d'une boisson (35) comprenant une tête de distribution (37) configurée pour recevoir de manière amovible un dispositif de distribution d'une boisson (17) selon l'une quelconque des revendications précédentes.

15. Appareil de production d'une boisson (35) selon la revendication précédente, dans lequel la tête de distribution (37) comprend un rail (65), de préférence deux rails (65), le rail (65) étant configuré pour permettre une insertion du dispositif de distribution d'une boisson (17) selon une direction d'insertion parallèle au rail (65), le rail (65) étant configuré pour maintenir le couvercle (56) dans sa position d'obturation lorsque le dispositif de distribution d'une boisson (17) est disposé dans la tête de distribution (37).
